# EUROPEAN PATENT APPLICATION

(11) **EP 4 407 008 A1**
(43) Date of publication of application: **31.07.2024**
(21) Application number: 22889396.2
(22) Date of filing: 04.11.2022
(51) Int. Cl.: C09D 133/26, C09D 7/63, C09D 163/00

(54) **ANTI-FOG COATING AND PREPARATION METHOD THEREFOR, AND ANTI-FOG GLASS**

(30) Priority: 05.11.2021 CN 202111305548
(71) Applicant: Fuyao Glass Industry Group Co., Ltd., Fuqing, Fujian 350300 (CN)
(72) Inventor: SUN, Yingying, Fujian 350300 (CN); GUO, Shanji, Fujian 350300 (CN); PANG, Qirui, Fujian 350300 (CN); ZHANG, Canzhong, Fujian 350300 (CN); KE, Cheng, Fujian 350300 (CN)
(74) Representative: Herrero & Asociados, S.L.
(86) International application number: PCT/CN2022/129715
(87) International publication number: WO 2023/078375

(57) **Abstract**

The present application relates to an anti-fog coating material, a preparation method therefor, and an anti-fog glass. The anti-fog coating material is prepared from raw materials including a hydrophilic copolymer, an epoxy resin, a coupling agent, a curing agent, and a first solvent. The hydrophilic copolymer is prepared from raw materials including a hydrophilic monomer, an initiator, and a second solvent. The solubility of the epoxy resin in water is greater than or equal to 90%. The solubility of the hydrophilic copolymer in water is greater than or equal to 90%.

## Description

### CROSS-REFERENCE TO RELATED APPLICATIONS

This application claims priority of China Patent Application No. 2021113055483, filed on November 05, 2021, entitled "ANTI-FOG COATING MATERIAL AND PREPARATION METHOD THEREFOR, AND ANTI-FOG GLASS", the content of which is hereby incorporated by reference in its entirety.

### TECHNICAL FIELD

The present application relates to the technical field of vehicle glass, in particular to an anti-fog coating material and a preparation method therefor, and an anti-fog glass.

### BACKGROUND

Automotive glass is prone to fogging when there is a significant difference in temperature or humidity between inside and outside of a vehicle. Fogging affects the driver's visibility, which may cause accidents. The commonly used methods for defogging such as air conditioning and electric heating have delayed response and high energy consumption.

Some of the currently disclosed technical solutions involve preparation of two layers of coating on an automotive glass substrate to eliminate the fogging phenomena. In one of those technical solutions, the two-layer structure includes a water-absorbing anti-fog layer, which prevents fogging, and a base layer, which acts as a bonding and buffering agent. In use, the water-absorbing anti-fog layer repeatedly absorbs and releases water, resulting in expansion and contraction of the coating, which generates a great interfacial stress. When only the water-absorbing anti-fog layer is used, the interfacial stress will lead to a decrease in the adhesion between the coating and the substrate, and peeling issues will easily occur. Therefore, the incorporation of the base layer is important as it not only can form a tight bond with the substrate, but also can relieve the interfacial stress produced by the water-absorbing anti-fog layer, thereby improving the overall peeling resistance. However, the process of forming the two layers of coating is cumbersome and increases the production costs.

### SUMMARY

In view of the above, an anti-fog coating material is provided according to embodiments of the present application. The technical solutions are described as follows.

An anti-fog coating material is prepared from raw materials including a hydrophilic copolymer, an epoxy resin, a coupling agent, a curing agent, and a first solvent. The hydrophilic copolymer is prepared from raw materials including a hydrophilic monomer, an initiator, and a second solvent. The solubility of the epoxy resin in water is greater than or equal to 90%. The solubility of the hydrophilic copolymer in water is greater than or equal to 90%.

In some embodiments, the hydrophilic monomer includes an acrylate monomer and an acrylamide monomer.

In some embodiments, the acrylate monomer is hydroxyethyl acrylate, hydroxypropyl acrylate, hydroxybutyl acrylate, hydroxyethyl methacrylate, hydroxypropyl methacrylate, hydroxybutyl methacrylate, glycidyl acrylate, glycidyl methacrylate, or a combination thereof.

In some embodiments, the acrylamide monomer is acrylamide, N,N-dimethylacrylamide, 2-acrylamido-2-methylpropanesulfonic acid, or a combination thereof.

In some embodiments, the epoxy resin is an aliphatic glycidyl ether. The aliphatic glycidyl ether is trimethylolpropane triglycidyl ether, glycerol triglycidyl ether, polyglycerol polyglycidyl ether, pentaerythritol glycidyl ether, polyethylene glycol diglycidyl ether, sorbitol glycidyl ether, or a combination thereof.

In some embodiments, the mass ratio of the hydrophilic copolymer to the epoxy resin is 1:1 to 1:4.

In some embodiments, the raw materials for the preparation of the anti-fog coating material includes about 1 to 80 parts by weight of the hydrophilic copolymer, about 1 to 20 parts by weight of the epoxy resin, about 0.1 to 10 parts by weight of the coupling agent, about 0.4 to 15 parts by weight of the curing agent, and about 20 to 50 parts by weight of the first solvent.

In some embodiments, the coupling agent is γ-methacryloxypropyltrimethoxysilane, γ-aminopropyltriethoxysilane, γ-glycidyloxypropyltrimethoxysilane, diethylenetriaminopropyltrimethoxysilane, ureidopropyltriethoxysilane, or a combination thereof.

In some embodiments, the curing agent is diethylenetriamine, aminoethylethanolamine, isophoronediamine, or a combination thereof.

In some embodiments, initiator is a free radical initiator containing an azo bond.

In some embodiments, the first solvent and the second solvent are each dependently an alcohol solvent or an ether solvent.

In some embodiments, the raw materials for the preparation of the anti-fog coating material further include a silane hydrolysis catalyst, a filler, an antioxidant, an UV absorber, a leveling agent, or a combination thereof.

In some embodiments, the silane hydrolysis catalyst is an alkali catalyst or an acid catalyst.

In some embodiments, the filler is nano-silica, nano-alumina, or a combination thereof.

In some embodiments, the antioxidant is triethylene glycol bis(3-tert-butyl-4-hydroxy-5-methylphenyl)propionate, isooctyl β-(3,5-di-tert-butyl-4-hydroxyphenyl)propionate, thiodiethylene bis[3-(3,5-di-tert-butyl-4-hydroxyphenyl) propionate], N,N'-bis(3 -(3,5 -di-tert-butyl-4-hydroxyphenyl)propionyl)hexamethylenediamine, or a combination thereof.

In some embodiments, the UV absorber is 2,2',4,4'-tetrahydroxybenzophenone, 2,4-dihydroxybenzophenone, 2-hydroxy-4-methoxybenzophenone, 2-hydroxy-4-methoxy-5-sulfobenzophenone, 2,2'-dihydroxy-4,4'-dimethoxybenzophenone, or a combination thereof.

In some embodiments, the raw materials for the preparation of the anti-fog coating material further includes an accelerator. The accelerator is methyllithium, triethylaluminum, ethylmagnesium iodide, methylzinc chloride, trimethyllead hydride, or a combination thereof.

The present application further provides a method for preparing the above anti-fog coating material. The technical solutions are described as follows.

A method for preparing the anti-fog coating material, including steps of
mixing the hydrophilic monomer, the initiator, and the second solvent to carry out a polymerization reaction, thereby forming the hydrophilic copolymer; and
mixing the hydrophilic copolymer, the epoxy resin, the coupling agent, the curing agent, and the first solvent to carry out a cross-linking reaction, thereby forming the anti-fog coating material.

In some embodiments, including a glass substrate and an anti-fog coating on the glass substrate. The anti-fog coating is formed by the above anti-fog coating material coated onto the glass substrate. The thickness of the anti-fog coating is about 5 to 30 micrometers.

In some embodiments, the glass substrate is a curved glass plate having a convex surface and a concave surface. The anti-fog coating is disposed on the concave surface. The anti-fogging coating has a maximum thickness and a minimum thickness. The difference between the maximum thickness and the minimum thickness is about 1 to 5 micrometers.

In some embodiments, the anti-fog glass further includes an intermediate bonding layer and an additional glass substrate. The glass substrate coated with the anti-fog coating, the intermediate bonding layer, and the additional glass substrate are stacked in sequence to form a laminated glass. The anti-fog coating is located on a surface of the glass substrate away from the intermediate bonding layer.

Details of one or more embodiments of the present application are set forth in the following description. The further features, objects, and advantages of the present application will become apparent from the specification and the claims.

### BRIEF DESCRIPTION OF THE DRAWINGS

In order to clearly illustrate the embodiments of the present application or technical solutions in the prior art, the following drawings, which are to be referred in the description of the embodiments or the prior art, will be briefly described below. Obviously, the drawings in the following description are only embodiments of the present application, and a person of ordinary skill in the art can obtain other drawings according to these drawings without any creative work.

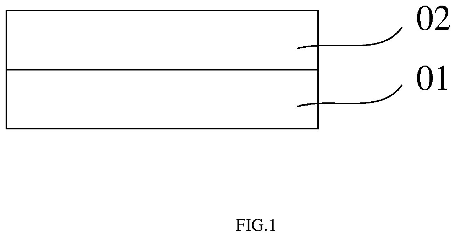

FIG. 1 is a schematic structural view of an anti-fog glass prepared according to an embodiment.

### DETAILED DESCRIPTION

The technical solutions in the embodiments of the present application will be clearly and completely described below. Apparently, the described embodiments are only some rather than all of embodiments of the present application. All other embodiments obtained by a person of ordinary skill in the art on the basis of the embodiments in the present application without creative work shall fall within the scope of protection of the application.

Unless otherwise defined, all technical and scientific terms used herein have the same meaning as commonly understood by a person of ordinary skill in the technical field of the present application. The terms used herein in the description of the present application are only for the purpose of describing specific embodiments, and are not intended to limit the present application.

### Terms

Unless otherwise stated or there is a contradiction, the terms or phrases used herein have the following meanings.

The terms "and/or", "or/and", and "as well as/or" used herein, when used in a list of two or more associated items, mean that any one of the items can be selected, and any or all combinations of the items can be selected. The any or all combinations include the combination of any two of the listed items, the combination of any more of the listed items, or the combination of all of the listed items.

The term "one or more" herein refers to any one, two, or more of the listed items, wherein the term "more" refers to two or more.

The terms used herein such as "combinations thereof, "a combination thereof, and "any combination manner thereof" include all suitable combinations of any two or more of the listed items.

The term "preferably" herein is only for describing the embodiments or examples with better effects, but should not be construed as limiting the scope of protection of the present application.

In the present application, an open-ended description for the technical features includes not only a close-ended technical solution consisting of the recited technical features, but also an open-ended technical solution including the recited technical features.

In the present application, when a numerical range is mentioned, unless otherwise specifically stated, the two endpoints of the numerical range are included.

In the present application, when an amount in percentage is mentioned, unless otherwise specifically stated, it refers to mass percentage for both a solid-liquid mixture and a solid-solid mixture, and refers to volume percentage for a liquid-liquid mixture.

In the present application, when a concentration in percentage is mentioned, unless otherwise specifically stated, it always refers to the final concentration, referring to the proportion of the added component in a system after adding that component.

In the present application, when a temperature parameter is mentioned, unless otherwise specifically stated, not only a thermostatic process but also a variation within a certain temperature interval is allowed. The thermostatic process allows for temperature fluctuations within the accuracy range of the instrument.

In the present application, when the term "solubility" is mentioned, unless otherwise specifically defined, it refers to a mass of a solute dissolved in water in the saturation state at 20 °C.

An anti-fog coating material is provided. The raw materials for preparation of the anti-fog coating material includes a hydrophilic copolymer, an epoxy resin, a coupling agent, a curing agent, and a first solvent.

The raw materials for preparation of the hydrophilic copolymer include a hydrophilic monomer, an initiator, and a second solvent.

The solubility of the epoxy resin in water is greater than or equal to 90%.

The solubility of the hydrophilic copolymer in water is greater than or equal to 90%.

In the present application, the hydrophilic copolymer with high solubility is prepared through a polymerization reaction of the hydrophilic monomer in the presence of the initiator. Then the hydrophilic copolymer is reacted with the epoxy resin with high solubility in the presence of the curing agent. The hydrophilic copolymer is a linear polymer. The hydrophilic copolymer in the linear structure can be cross-linked with the epoxy resin to form a robust semi-interpenetrating network structure, which is conducive to improving the surface adhesion, the abrasion resistance, the toughness, and the heat resistance. The semi-interpenetrating network structure allows the coating to release the stress generated by the water absorption and release, so that the coating is not easy to be peeled off from the glass substrate. In addition, the coupling agent can play an important role in connection of the coating with the glass substrate, so that the prepared coating material can be directly coated on the glass substrate as a single layer and is not easy to be peeled off. By coating the anti-fog coating material of the present application as a single layer on the glass substrate, both a base layer between the anti-fog water-absorbing layer and the glass substrate and a hard coating on an outer surface of the anti-fog water-absorbing layer can be omitted, the production process can be simplified, and the production cost can be reduced. Moreover, the anti-fog coating of the present application has good water absorption and excellent anti-fog effect, can realize active anti-fogging of the glass, has a long service life, and significantly reduces the energy consumption of the automobile.

The higher the solubility, the more polar groups present, facilitating the forming of the coating with a higher water absorption. Preferably, the solubility of the hydrophilic copolymer in water is greater than or equal to 95%.

In an embodiment, the hydrophilic monomer includes an acrylate monomer and an acrylamide monomer.

The acrylate monomer and the acrylamide monomer are both hydrophilic monomers and can undergo a polymerization reaction in the presence of the initiator to prepare the hydrophilic copolymer in a linear structure with high solubility.

The acrylate polymer has good film-forming performance and good adhesion to the substrate. In addition, the acrylate monomer can provide varied functionalities by varying its side chain structures. In a preferred embodiment, the acrylate monomer is selected from those whose side chain contains a hydrophilic group, which can increase the hydrophilicity of the coating. Besides, a monomer having a methyl group can be used to ensure the hardness and the water resistance of the coating. The acrylamide monomer can provide the hydrophilic amide group and can also acts as a cross-linker.

Optionally, the molecular structure of the hydrophilic monomer contains a chemical group selected from a hydroxyl group, a carboxyl group, an epoxy group, a primary amino group, a secondary amino group, a tertiary amino group, a cyano group, and an amide group.

Optionally, the acrylate monomer is hydroxyethyl acrylate, hydroxypropyl acrylate, hydroxybutyl acrylate, hydroxyethyl methacrylate, hydroxypropyl methacrylate, hydroxybutyl methacrylate, glycidyl acrylate, glycidyl methacrylate or a combination thereof.

Optionally, the acrylamide monomer is acrylamide, N,N-dimethylacrylamide, 2-acrylamido-2-methylpropanesulfonic acid, or a combination thereof.

The above-described hydrophilic monomers can undergo a polymerization reaction in the presence of the initiator to form the hydrophilic copolymer.

Optionally, the initiator is a free radical initiator containing an azo bond.

In some embodiments, the initiator is an azo initiator which includes, but is not limited to, 2,2'-azobis(2-methylpropionitrile), 2,2'-azobis-(2,4-dimethylvaleronitrile), 2,2'-azobis(2-methylpropionamidine) dihydrochloride, 2,2'-azobis[2-(2-imidazolin-2-yl)propane] dihydrochloride, and 1-[(cyano-1-methylethyl)azo]formamide. This class of initiators produces only one type of free radical through decomposition, inducing no other side reactions.

It is to be understood that the above polymerization reaction is carried out in the second solvent.

Optionally, the second solvent is an alcohol solvent or an ether solvent, selected from, but not limited to, n-butanol, isobutanol, ethanol, methanol, ethylene glycol methyl ether, ethylene glycol ethyl ether, ethylene glycol propyl ether, ethylene glycol butyl ether, propylene glycol methyl ether, propylene glycol ethyl ether, propylene glycol propyl ether, and propylene glycol butyl ether. These organic solvents are easily miscible with the above hydrophilic monomers, and are also miscible with the component such as the epoxy resin, so that the final prepared coating will not have problems such as phase separation.

It is to be understood that the above polymerization reaction is carried out under an inert atmosphere.

The gas providing the inert atmosphere can be nitrogen, argon, or helium. The inert gas allows to avoid the influence of water vapor in the air on the reaction of the system.

After the preparation of the hydrophilic copolymer, the hydrophilic copolymer, the epoxy resin, the coupling agent, the curing agent, and the first solvent are mixed to carry out a cross-linking reaction to prepare the anti-fog coating material.

Optionally, the epoxy resin is an aliphatic glycidyl ether.

The aliphatic glycidyl ether is trimethylolpropane triglycidyl ether, glycerol triglycidyl ether, polyglycerol polyglycidyl ether, pentaerythritol glycidyl ether, polyethylene glycol diglycidyl ether, sorbitol glycidyl ether, or a combination thereof.

The molecular structure of the aliphatic glycidyl ether contains an epoxy group which can undergo the ring-opening cross-linking reaction, and contains a hydrophilic group.

Preferably, the molecular structure of the aliphatic glycidyl ether contains at least two functional groups.

In an embodiment, the mass ratio of the hydrophilic copolymer to the epoxy resin is 1:1 to 1:4.

Optionally, the coupling agent is a silane coupling agent, which can be γ-methacryloxypropyltrimethoxysilane (KH570), γ-aminopropyltriethoxysilane (KH550), γ-glycidyloxypropyltrimethoxysilane (KH560), diethylenetriaminopropyltrimethoxysilane, ureidopropyltriethoxysilane, or a combination thereof. Hydrolysis of the silane coupling agent produces Si-OH, which can bind tightly to the glass substrate.

Further optionally, the raw materials for the preparation of the anti-fog coating material further includes a silane hydrolysis catalyst. The silane hydrolysis catalyst is added to accelerate the hydrolysis of the silane coupling agent.

Optionally, the silane hydrolysis catalyst is an alkali catalyst or an acid catalyst.

The alkali catalyst is selected from, but is not limited to, ammonia, sodium hydroxide, and potassium hydroxide.

The acid catalyst is selected from, but is not limited to, nitric acid, hydrochloric acid, and acetic acid.

Optionally, the curing agent is diethylenetriamine, aminoethylethanolamine, isophoronediamine, or a combination thereof.

Optionally, the first solvent is an alcohol solvent or an ether solvent, selected from, but not limited to, n-butanol, isobutanol, ethanol, methanol, ethylene glycol methyl ether, ethylene glycol ethyl ether, ethylene glycol propyl ether, ethylene glycol butyl ether, propylene glycol methyl ether, propylene glycol ethyl ether, propylene glycol propyl ether, and propylene glycol butyl ether. These organic solvents are easily miscible with the above hydrophilic monomers, and are also miscible with the component such as the epoxy resin, so that the final prepared coating will not have problems such as phase separation. The first solvent is the same as or different from the second solvent.

In some embodiments, the raw materials for the preparation of the anti-fog coating material includes about 1 to 80 parts by weight of the hydrophilic copolymer, about 1 to 20 parts by weight of the epoxy resin, about 0.1 to 10 parts by weight of the coupling agent, about 0.4 to 15 parts by weight of the curing agent, and about 20 to 50 parts by weight of the first solvent.

Optionally, the raw materials for the preparation of the anti-fog coating material further include one or more of a filler, an antioxidant, an UV absorber, and a leveling agent.

The filler can be added to improve the abrasion resistance and the heat resistance of the coating. In an embodiment, the filler is nano-silica, nano-alumina, or a combination thereof. The primary particle size of the filler is preferably 20 nm or less. The examples of the filler include AERROSIL A200, AEROXIDE ALU C, WACKER HDK V15, N20, and so on, commercially available from Evonik.

Preferably, the amount of the filler is 0.05% to 0.20% by mass in the total amount of the coating material, which is 100% by mass.

The antioxidant or the UV absorber can be added to improve the aging resistance or the weather resistance of the coating. The antioxidant is triethylene glycol bis(3-tert-butyl-4-hydroxy-5-methylphenyl)propionate, isooctyl β-(3,5-di-tert-butyl-4-hydroxyphenyl)propionate, thiodiethylene bis[3-(3,5-di-tert-butyl-4-hydroxyphenyl) propionate], N,N'-bis(3 -(3,5 -di-tert-butyl-4-hydroxyphenyl)propionyl)hexamethylenediamine, or a combination thereof. The UV absorber is 2,2',4,4'-tetrahydroxybenzophenone, 2,4-dihydroxybenzophenone, 2-hydroxy-4-methoxybenzophenone, 2-hydroxy-4-methoxy-5-sulfobenzophenone, 2,2'-dihydroxy-4,4'-dimethoxybenzophenone, or a combination thereof.

In some preferred embodiments, the antioxidant is triethylene glycol bis(3-tert-butyl-4-hydroxy-5-methylphenyl)propionate, the UV absorber is 2,2',4,4'-tetrahydroxybenzophenone, and the amounts of the antioxidant and the UV absorber are 0.5% to 1.5% by mass and 0.1% to 0.5% by mass, respectively in the total amount of the coating material, which is 100% by mass.

The leveling agent can be added to reduce problems such as orange peel and shrinkage of the coating, and make the surface of the coating smoother and flatter. The examples of the flatting agent include BYK-345, BYK-333, BYK-307, BYK337, BYK341, etc. from BYK Germany.

Preferably, the amount of the leveling agent can be 150 ppm to 600 ppm based on the total mass of the system.

Optionally, the raw materials for the preparation of the anti-fog coating material further include an accelerator, which is an organic compound including a bond directly formed between a metal atom and a carbon atom. The accelerator can be added to improve the toughness and the abrasion resistance of the coating by the complexation of the metal. In an embodiment, the accelerator is methyllithium, triethylaluminum, ethylmagnesium iodide, methylzinc chloride, trimethyllead hydride, or a combination thereof.

In an embodiment, the amount of the accelerator is 0.5%-3% by mass, preferably 1%-1.8% by mass in the total amount of the coating material, which is 100% by mass.

It is to be understood that other functional additives can be added to the anti-fog coating material of the present application, if necessary.

A method for preparing an anti-fog glass is provided according to an embodiment of the present application, includes the following steps.

### Step 1: preparation of a hydrophilic copolymer

About 5 to 35 parts by weight of a hydrophilic monomer and about 40 to 85 parts by weight of a solvent are introduced to a reaction flask. After dispersing by stirring under an inert gas atmosphere, an initiator is added and the mixture is reacted at a temperature for a time period.

### Step 2: preparation of an anti-fog coating material

About 1 to 80 parts by weight of the hydrophilic copolymer, about 1 to 20 parts by weight of an epoxy resin, about 0.1 to 10 parts by weight of a coupling agent, about 0.5 to 15 parts by weight of a curing agent, and about 20 to 50 parts by weight of a first solvent are stirred uniformly and reacted at a temperature for a time period to obtain the anti-fog coating material.

Step 3: preparation of an anti-fog glass, referring to FIG. 1, which illustrates a schematic structural view of the anti-fog glass of this embodiment.

A surface of a glass substrate 01 is subjected to a cleaning treatment. The cleaning of the glass facilitates a more sufficient and uniform application of the coating liquid on the surface.

It is to be understood that the cleaning treatment is physical cleaning, chemical cleaning, or a combination of physical cleaning and chemical cleaning. In the cleaning treatment, the physical cleaning is gauze wiping, polishing by polishing powder, plasma treatment, or a combination thereof. The polishing powder in the physical cleaning is nano-cerium oxide nanoparticles, nano-aluminum oxide nanoparticles, nano-magnesium oxide, or a combination thereof. The chemical cleaning is alkaline washing, acid washing, piranha solution soaking, or a combination thereof. The cleaning treatment is for the purpose of removing the dust particles from the glass and activating the surface of the glass. The cleaning method is not limited to the above methods, and any method that can achieve the purpose can be used.

Then the anti-fog coating material is coated onto the surface of the glass by a coating method. After leveling on the surface of the glass, the anti-fog coating liquid is cured at a temperature for a time period to form the anti-fog coating 02. The anti-fog coating 02 can be adhered tightly to the surface of the glass substrate 01 by chemical bonds. The thickness of the anti-fog coating is about 5 micrometers to about 30 micrometers.

Optionally, the coating method is spin coating, shower coating, spray coating, dip coating, or spray coating. In an embodiment, the coating is spray coating. The use of the spray coating allows more accurate control of the thickness of the coating and ensures higher uniformity of the overall thickness of the coating.

Optionally, the curing temperature is about 120°C to about 200°C. The curing time is about 20 min to about 720 min.

In an embodiment, the anti-fog coating material can be formulated as an anti-fog spray. The driver can spray the anti-fog spray onto the glass of the automobile to achieve the active anti-fogging of the glass. As a result, the glass has a long service life and the energy consumption of the automobile is significantly reduced.

An anti-fog glass is provided, including a glass substrate and an anti-fog coating on the glass substrate. The anti-fog coating is formed from the above-described anti-fog coating material coated onto the glass substrate. The thickness of the anti-fog coating is about 5 micrometers to 30 about micrometers.

In an embodiment, the glass substrate can be a curved glass plate having a convex surface and a concave surface. The anti-fog coating is disposed on the concave surface. The anti-fogging coating has a maximum thickness and a minimum thickness. The difference between the maximum thickness and the minimum thickness is about 1 micrometers to about 5 micrometers.

The anti-fog coating can be formed on the concave surface by spray coating, which allows more accurate control of the thickness of the coating and ensures relatively high uniformity of the overall thickness of the coating.

In an embodiment, the anti-fog glass can further include an intermediate bonding layer and an additional glass substrate. A laminated glass can be formed by stacking the glass substrate coated with the anti-fog coating, the intermediate bonding layer, and the additional glass substrate in sequence. The anti-fog coating is located on the surface of the glass substrate away from the intermediate bonding layer.

Further description will be provided below with reference to specific examples and comparative examples. In the following specific examples, the raw materials involved are commercially available unless otherwise specifically stated, the instruments used are commercially available unless otherwise specifically stated, and the processes involved are common processes in the art unless otherwise specifically stated.

### Example 1

This example provides an anti-fog glass and a preparation method thereof including the following steps.

### Step 1: Preparation of a hydrophilic copolymer

2 g of hydroxyethyl acrylate, 4 g of acrylamide, and 40 g of propylene glycol methyl ether were weighted and added to a reaction flask. Nitrogen gas was introduced for protection. The mixture was stirred uniformly, and then added with 0.15 g of 2,2'-azobis(2-methylpropionitrile). The reaction flask was placed in an oil bath at 70 °C to carry out a reaction under stirring for 12 h, thereby obtaining a hydrophilic copolymer with a solubility of 94 %.

### Step 2: Preparation of an anti-fog coating material

7.5 g of the hydrophilic copolymer prepared in step 1 and 5 g of an epoxy resin EX-313 (commercially available from Nagase Chemtex Corporation, Japan, a glycerol triglycidyl ether with a solubility of 99 %) at a mass ratio of 1.5:1 were taken and mixed uniformly in 50 g of anhydrous ethanol, and then added with 0.5 g of a silane coupling agent KH550 and 0.6 g of diethylenetriamine, stirred uniformly, and subjected to a reaction at room temperature for 2 h, thereby obtaining an anti-fog coating material 1.

### Step 3: Preparation of an anti-fog glass

A surface of a glass substrate was cleaned and coated with the anti-fog coating material prepared in step 2 followed by curing at 150 °C for 2 h, thereby obtaining an anti-fog glass.

### Example 2

This example provides an anti-fog glass and a preparation method thereof including the following steps.

### Step 1: Preparation of a hydrophilic copolymer

2 g of hydroxyethyl acrylate, 4 g of acrylamide, and 40 g of propylene glycol methyl ether were weighted and added to a reaction flask. Nitrogen gas was introduced for protection. The mixture was stirred uniformly, and then added with 0.15 g of 2,2'-azobis(2-methylpropionitrile). The reaction flask was placed in an oil bath at 70 °C to carry out a reaction under stirring for 12 h, thereby obtaining a hydrophilic copolymer with a solubility of 94 %.

### Step 2: Preparation of an anti-fog coating material

12 g of the hydrophilic copolymer prepared in step 1 and 3 g of an epoxy resin EX-614B (commercially available from Nagase Chemtex Corporation, Japan, a sorbitol glycidyl ether with a solubility of 94 %) at a mass ratio of 4:1 were taken and mixed uniformly in 50 g of anhydrous ethanol, and then added with 0.5 g of a silane coupling agent KH560 and 0.4 g of diethylenetriamine, stirred uniformly, and subjected to a reaction at room temperature for 2 h, thereby obtaining an anti-fog coating material 2.

### Step 3: Preparation of an anti-fog glass

A surface of a glass substrate was cleaned and coated with the anti-fog coating material prepared in step 2 followed by curing at 160 °C for 2 h, thereby obtaining an anti-fog glass.

### Example 3

This example provides an anti-fog glass and a preparation method thereof including the following steps.

### Step 1: Preparation of a hydrophilic copolymer

1 g of hydroxyethyl methylacrylate, 4 g of N,N-dimethylacrylamide, and 40 g of propylene glycol methyl ether were weighted and added to a reaction flask. Nitrogen gas was introduced for protection. The mixture was stirred uniformly, and then added with 0.1 g of 2,2'-azobis(2-methylpropionitrile). The reaction flask was placed in an oil bath at 70 °C to carry out a reaction under stirring for 12 h, thereby obtaining a hydrophilic copolymer with a solubility of 92 %.

### Step 2: Preparation of an anti-fog coating material

7.5 g of the hydrophilic copolymer prepared in step 1 and 5 g of an epoxy resin EX-313 (commercially available from Nagase Chemtex Corporation, Japan, a glycerol triglycidyl ether, with a solubility of 99 %) at a mass ratio of 1.5:1 were taken and mixed uniformly in 50 g of anhydrous ethanol, and then added with 0.5 g of a silane coupling agent KH550 and 1.3 g of aminoethylethanolamine, stirred uniformly, and subjected to a reaction at room temperature for 3 h, thereby obtaining an anti-fog coating material 3.

### Step 3: Preparation of an anti-fog glass

A surface of a glass substrate was cleaned and coated with the anti-fog coating material prepared in step 2 followed by curing at 150 °C for 2 h, thereby obtaining an anti-fog glass.

### Example 4

This example provides an anti-fog glass and a preparation method thereof including the following steps.

### Step 1: Preparation of a hydrophilic copolymer

1.5 g of hydroxyethyl methylacrylate, 5 g of N,N-dimethylacrylamide, and 55 g of propylene glycol methyl ether were weighted and added to a reaction flask. Nitrogen gas was introduced for protection. The mixture was stirred uniformly, and then added with 0.15 g of 2,2'-azobis(2-methylpropionitrile). The reaction flask was placed in an oil bath at 80 °C to carry out a reaction under stirring for 1 h, thereby obtaining a hydrophilic copolymer with a solubility of 93 %.

### Step 2: Preparation of an anti-fog coating material

6 g of the hydrophilic copolymer prepared in step 1 and 6 g of an epoxy resin EX-512 (commercially available from Nagase Chemtex Corporation, Japan, a polyglycerol polyglycidyl ether, with a solubility of 100 %) at a mass ratio of 1:1 were taken and mixed uniformly in 50 g of anhydrous ethanol, and then added with 0.5 g of a silane coupling agent KH550 and 1.2 g of aminoethylethanolamine, stirred uniformly, and subjected to a reaction at room temperature for 1 h, thereby obtaining an anti-fog coating material 4.

### Step 3: Preparation of an anti-fog glass

A surface of a glass substrate was cleaned and coated with the anti-fog coating material prepared in step 2 followed by curing at 200 °C for 1 h, thereby obtaining an anti-fog glass.

### Example 5

This example provides an anti-fog glass and a preparation method thereof including the following steps.

### Step 1: Preparation of a hydrophilic copolymer

6 g of hydroxyethyl acrylate and 40 g of propylene glycol methyl ether were weighted and added to a reaction flask. Nitrogen gas was introduced for protection. The mixture was stirred uniformly, and then added with 0.15 g of 2,2'-azobis(2-methylpropionitrile). The reaction flask was placed in an oil bath at 70 °C to carry out a reaction under stirring for 12 h, thereby obtaining a hydrophilic copolymer with a solubility of 92 %.

### Step 2: Preparation of an anti-fog coating material

7.5 g of the hydrophilic copolymer prepared in step 1 and 5 g of an epoxy resin EX-313 (commercially available from Nagase Chemtex Corporation, Japan, a glycerol triglycidyl ether with a solubility of 99 %) at a mass ratio of 1.5:1 were taken and mixed uniformly in 50 g of anhydrous ethanol, and then added with 0.5 g of a silane coupling agent KH550 and 0.6 g of diethylenetriamine, stirred uniformly, and subjected to a reaction at room temperature for 2 h, thereby obtaining an anti-fog coating material 5.

### Step 3: Preparation of an anti-fog glass

A surface of a glass substrate was cleaned and coated with the anti-fog coating material prepared in step 2 followed by curing at 150 °C for 2 h, thereby obtaining an anti-fog glass.

### Comparative Example 1

This comparative example provides an anti-fog glass and a preparation method thereof including the following steps.

### Step 1: Preparation of a hydrophilic copolymer

2 g of hydroxyethyl acrylate, 4 g of acrylamide, and 40 g of propylene glycol methyl ether were weighted and added to a reaction flask. Nitrogen gas was introduced for protection. The mixture was stirred uniformly, and then added with 0.15 g of 2,2'-azobis(2-methylpropionitrile). The reaction flask was placed in an oil bath at 70 °C to carry out a reaction under stirring for 12 h, thereby obtaining a hydrophilic copolymer with a solubility of 94 %.

### Step 2: Preparation of an anti-fog coating material

10 g of the hydrophilic copolymer prepared in step 1 and 5 g of an epoxy resin EX-313 (commercially available from Nagase Chemtex Corporation, Japan, a glycerol triglycidyl ether with a solubility of 99 %) at a mass ratio of 2:1 were taken and mixed uniformly in 50 g of anhydrous ethanol, and then added with 1.5 g of isophorone diamine, stirred uniformly, and subjected to a reaction at room temperature for 2 h, thereby obtaining an anti-fog coating material 6.

### Step 3: Preparation of an anti-fog glass

A surface of a glass substrate was cleaned and coated with the anti-fog coating material prepared in step 2 followed by curing at 150 °C for 2 h, thereby obtaining an anti-fog glass.

### Comparative Example 2

This comparative example provides an anti-fog glass and a preparation method thereof including the following steps.

### Step 1: Preparation of an anti-fog coating material

6 g of an epoxy resin EX-313 (commercially available from Nagase Chemtex Corporation, Japan, a glycerol triglycidyl ether with a solubility of 99 %) was taken, mixed uniformly with 50 g of anhydrous ethanol, then added with 1.5 g of aminoethylethanolamine, stirred uniformly, and subjected to a reaction at room temperature for 2 h, thereby obtaining an anti-fog coating material 7.

### Step 2: Preparation of an anti-fog glass

A surface of a glass substrate was cleaned and coated with the anti-fog coating material prepared in step 2 followed by curing at 120 °C for 2 h, thereby obtaining an anti-fog glass.

The performances of the above prepared anti-fog glasses were respectively evaluated according to the following evaluation methods.

**Anti-fogging evaluation:** the anti-fog glass was placed in an environment at 20°C and 50% relative humidity (RH) for 1h, and then placed above the surface of more than 100 ml of 35°C water, with a distance of 5 cm from the surface of water. The fog formation time (s) was determined by visual observation.

**Boiling water resistance:** the anti-fog glass was placed in boiling water at 100 °C for 2h and taken out for observation of the appearance.

OK: no whitening, skinning, peeling, or flaking of the coating occurs.

NG: whitening, skinning, peeling, or flaking of the coating occurs.

**Alkali resistance:** the anti-fog glass was soaked in 0.1n NaOH for 3h, taken out, rinsed with deionized water, and dried for observation of the appearance.

OK: no whitening, skinning, peeling, or flaking of the coating occurs.

NG: whitening, skinning, peeling, or flaking of the coating occurs.

**Abrasion resistance:** the abrasion resistance of the anti-fog glass was tested by using Taber 5131, from the United States, with the following conditions: a load of 4.9N/400mm² (20mm * 20mm friction surface), 40 cycles/minute, 5000 cycles of abrasion. The friction cloth was replaced every 1000 cycles. After the test, the appearance of the glass was observed and the haze of the glass was tested by using a haze meter (model HZ-V3) from Suga International Holdings Ltd., Japan.

OK: no cracking, peeling, or flaking of the coating occurs, and the change of the haze value is less than 2.

NG: cracking, peeling, or flaking of the coating occurs, and the change of the haze value is less than 2.

The evaluation results are shown in Table 1.

**Table 1**

| Evaluation item | Example 1 | Example 2 | Example 3 | Example 4 | Example 5 | Comparative Example 1 | Comparative Example 2 |
|---|---|---|---|---|---|---|---|
| Anti-fogging evaluation | 102s | 55s | 96s | 112s | 100s | 84s | 90s |
| Boiling water resistance | OK | OK | OK | OK | OK | NG | NG |
| Alkali resistance | OK | OK | OK | OK | OK | OK | NG |
| Abrasion resistance | OK | OK | OK | OK | NG | OK | NG |

As can be seen from Table 1, all of the single coating layer anti-fogging glasses in Examples 1 to 5 meet the requirements on the anti-fogging evaluation, the boiling resistance, and the alkali resistance, with simplified process and reduced production cost. Specifically, the fogging time on the glass is delayed, providing good anti-fogging performance, improving driving safety, and reducing energy consumption of the automobile. In addition, the boiling water resistance and the alkali resistance are good, and the peeling is not easy to occur. Further, the single coating layer anti-fogging glasses in Examples 1 to 4 have good abrasion resistance. In Example 5, which only uses an acrylate monomer as the hydrophilic monomer, the abrasion resistance of the coating is slightly reduced, due to the absence of the cross-linking by the acrylamide monomer, which causes reduced cross-linking density and decreased strength of the coating.

As a comparison, in Comparative Example 2, which does not include a hydrophilic copolymer or a coupling agent, none of the requirements on the boiling water resistance, the alkali resistance, and the abrasion resistance is met, suggesting a poor bonding force between the anti-fog coating and the glass substrate. The coating is easily peeled off from the glass substrate due to the stress generated in expansion and shrinkage resulted after the water absorption. In addition, there is no semi-interpenetrating network structure formed from the hydrophilic copolymer and the epoxy resin, so that the network structure of the coating is not robust, which results weak surface peeling resistance. In Comparative Example 1, which includes no coupling agent, the boiling water resistance is poor, suggesting that the coupling agent plays an important role in bonding between the coating and the glass substrate.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. An anti-fog coating material, prepared from raw materials comprising a hydrophilic copolymer, an epoxy resin, a coupling agent, a curing agent, and a first solvent, wherein
the hydrophilic copolymer is prepared from raw materials comprising a hydrophilic monomer, an initiator, and a second solvent;
the solubility of the epoxy resin in water is greater than or equal to 90%; and
the solubility of the hydrophilic copolymer in water is greater than or equal to 90%.

2. The anti-fog coating material of claim 1, wherein the hydrophilic monomer comprises an acrylate monomer and an acrylamide monomer.

3. The anti-fog coating material of claim 2, wherein the acrylate monomer is hydroxyethyl acrylate, hydroxypropyl acrylate, hydroxybutyl acrylate, hydroxyethyl methacrylate, hydroxypropyl methacrylate, hydroxybutyl methacrylate, glycidyl acrylate, glycidyl methacrylate, or a combination thereof.

4. The anti-fog coating material of claim 2, wherein the acrylamide monomer is acrylamide, N,N-dimethylacrylamide, 2-acrylamido-2-methylpropanesulfonic acid, or a combination thereof.

5. The anti-fog coating material of any one of claims 1 to 4, wherein the epoxy resin is an aliphatic glycidyl ether;
the aliphatic glycidyl ether is trimethylolpropane triglycidyl ether, glycerol triglycidyl ether, polyglycerol polyglycidyl ether, pentaerythritol glycidyl ether, polyethylene glycol diglycidyl ether, sorbitol glycidyl ether, or a combination thereof.

6. The anti-fog coating material of any one of claims 1 to 5, wherein the mass ratio of the hydrophilic copolymer to the epoxy resin is 1:1 to 1:4.

7. The anti-fog coating material of claim 6, wherein the raw materials for the preparation of the anti-fog coating material comprises about 1 to 80 parts by weight of the hydrophilic copolymer, about 1 to 20 parts by weight of the epoxy resin, about 0.1 to 10 parts by weight of the coupling agent, about 0.4 to 15 parts by weight of the curing agent, and about 20 to 50 parts by weight of the first solvent.

8. The anti-fog coating material of any one of claims 1 to 7, wherein the coupling agent is γ-methacryloxypropyltrimethoxysilane, γ-aminopropyltriethoxysilane, γ-glycidyloxypropyltrimethoxysilane, diethylenetriaminopropyltrimethoxysilane, ureidopropyltriethoxysilane, or a combination thereof.

9. The anti-fog coating material of any one of claims 1 to 7, wherein the curing agent is diethylenetriamine, aminoethylethanolamine, isophoronediamine, or a combination thereof.

10. The anti-fog coating material of any one of claims 1 to 7, wherein initiator is a free radical initiator containing an azo bond.

11. The anti-fog coating material of any one of claims 1 to 7, wherein the first solvent and the second solvent are each dependently an alcohol solvent or an ether solvent.

12. The anti-fog coating material of any one of claims 1 to 7, wherein the raw materials for the preparation of the anti-fog coating material further comprise a silane hydrolysis catalyst, a filler, an antioxidant, an UV absorber, a leveling agent, or a combination thereof.

13. The anti-fog coating material of claim 12, wherein the silane hydrolysis catalyst is an alkali catalyst or an acid catalyst.

14. The anti-fog coating material of claim 12, wherein the filler is nano-silica, nano-alumina or a combination thereof.

15. The anti-fog coating material of claim 12, wherein the antioxidant is triethylene glycol bis(3-tert-butyl-4-hydroxy-5-methylphenyl)propionate, isooctyl β-(3,5-di-tert-butyl-4-hydroxyphenyl)propionate, thiodiethylene bis[3-(3,5-di-tert-butyl-4-hydroxyphenyl) propionate], N,N'-bis(3 -(3,5 -di-tert-butyl-4-hydroxyphenyl)propionyl)hexamethylenediamine, or a combination thereof.

16. The anti-fog coating material of claim 12, wherein the UV absorber is 2,2',4,4'-tetrahydroxybenzophenone, 2,4-dihydroxybenzophenone, 2-hydroxy-4-methoxybenzophenone, 2-hydroxy-4-methoxy-5-sulfobenzophenone, 2,2'-dihydroxy-4,4'-dimethoxybenzophenone, or a combination thereof.

17. The anti-fog coating material of any one of claims 1 to 16, wherein the raw materials for the preparation of the anti-fog coating material further comprises an accelerator, the accelerator is methyllithium, triethylaluminum, ethylmagnesium iodide, methylzinc chloride, trimethyllead hydride, or a combination thereof.

18. A method for preparing an anti-fog coating material of any one of claims 1 to 17, comprising steps of:
mixing the hydrophilic monomer, the initiator, and the second solvent to carry out a polymerization reaction, thereby forming the hydrophilic copolymer; and
mixing the hydrophilic copolymer, the epoxy resin, the coupling agent, the curing agent, and the first solvent to carry out a cross-linking reaction, thereby forming the anti-fog coating material.

19. An anti-fog glass, comprising a glass substrate and an anti-fog coating on the glass substrate, wherein the anti-fog coating is formed by an anti-fog coating material of any one of claims 1 to 17 coated onto the glass substrate, and the thickness of the anti-fog coating is about 5 to 30 micrometers.

20. The anti-fog glass of claim 19, wherein the glass substrate is a curved glass plate having a convex surface and a concave surface, the anti-fog coating is disposed on the concave surface, the anti-fogging coating has a maximum thickness and a minimum thickness, and the difference between the maximum thickness and the minimum thickness is about 1 to 5 micrometers.

21. The anti-fog glass of claim 19 or 20, further comprising an intermediate bonding layer and an additional glass substrate, the glass substrate coated with the anti-fog coating, the intermediate bonding layer, and the additional glass substrate are stacked in sequence to form a laminated glass, and the anti-fog coating is located on a surface of the glass substrate away from the intermediate bonding layer.
